# FASCICULE DE BREVET EUROPEEN

(11) **EP 4 146 503 B1**
(45) Date de publication et mention de la délivrance du brevet: **02.07.2025**
(21) Numéro de dépôt: 21732403.7
(22) Date de dépôt: 29.04.2021
(51) Int. Cl.: B60P 3/07, B60P 3/077, B60P 1/64

(54) **SYSTÈME PORTEUR DE CHARIOT**
WAGENTRANSPORTSYSTEM
CARRIAGE CARRYING SYSTEM

(30) Priorité: 04.05.2020 FR 2004401
(43) Date de publication de la demande: 15.03.2023
(73) Titulaire: Stanley Robotics, 75001 Paris (FR)
(72) Inventeur: CORD, Aurélien, 75014 PARIS (FR); LIPS, Mathieu, 75011 PARIS (FR); BOUSSARD, Clément, 75004 PARIS (FR)
(74) Mandataire: IP Trust
(86) Numéro de dépôt international: PCT/FR2021/050743
(87) Numéro de publication internationale: WO 2021/224567

(56) Documents cités:
- WO-A1-2016/189233
- DE-A1- 102017 209 791
- FR-A1- 2 979 609
- US-A- 4 310 271

## Description

### Domaine de l'invention

La présente invention concerne le domaine des tracteurs de chariot de manutention. Ces tracteurs de chariot de manutention tractent un ou plusieurs wagons, formé de chariots à quatre roues, le nombre variant en fonction de la nature et de la quantité du matériel à charger ou décharger. Ces chariots comportent un dispositif d'attelage formé par un timon prévu à l'avant du chariot et un crochet prévu à l'arrière d'un tracteur, en particulier d'un chariot précédent dans une file de chariots, le timon et le crochet étant propres à coopérer l'un avec l'autre. Parfois le timon entraîne un essieu orientable supportant les roues avant, pour améliorer la manœuvrabilité. Habituellement, un tel chariot comprend deux roues avant orientables et deux roues arrière, orientables ou non. Dans les chariots de manutention connus, comme divulgués par le document US-A-2 454 641, le timon est réalisé sous la forme d'un élément longitudinal, monté à articulation autour d'un axe transversal du chariot, et muni à sa partie antérieure d'un anneau propre à coopérer avec le crochet du tracteur. Le terme "tracteur" désigne aussi bien un engin, motorisé ou non, qui assure la traction du chariot, qu'un autre chariot situé immédiatement en amont dans une file de chariots.

Les trains de convoyage concerné par la présente invention sont utilisés dans des zones de convoyage où l'approvisionnement et/ou le transit de charges est nécessaire et doit être très flexible, tant pour la disponibilité que pour la modularité de la capacité de charge, comme par exemple dans les aéroports et/ou les gares pour assurer le transport des bagages et/ou de toute autre charge en transit, dans les usines de fabrication, de transformation, de lignes de production pour assurer l'approvisionnement des postes de travail en matières premières, pièces et composants ainsi que l'évacuation des pièces ou sous-ensembles fabriqués et/ou assemblés vers d'autres postes de travail, etc. Ce type de train de convoyage permet de transporter les charges en caisse, en conteneur, sur palette ou sous toute autre forme équivalente, entre plusieurs zones, qui peuvent être des zones de déchargement, de stockage, de fabrication, de montage, d'assemblage, de chargement, etc. Le train de convoyage peut suivre ou non une piste prédéfinie et peut circuler sur une trajectoire en boucle fermée le ramenant par exemple à son point de départ. Il peut également être programmé pour effectuer des parcours type et/ou être muni de capteurs de présence pour circuler en mode automatique et éviter les obstacles.

Les tracteurs de chariot de manutention sont généralement entraînés par des moteurs électriques, qui sont alimentés par un dispositif de stockage d'énergie électrique, comme une batterie. La batterie est chargée à un hub central de l'aéroport, et il n'est pas rare que la batterie s'épuise pendant le fonctionnement, en particulier si du fret lourd est transporté. En cas d'épuisement de la batterie, le tracteur de chariot de manutention doit être remorqué jusqu'au véhicule pour être rechargé par un autre véhicule ou par une prise de courant.

### Etat de la technique

On connaît dans l'état de la technique le brevet français FR2979609 décrivant une remorque destinée au transport de remorques équipés de roulettes, sur lesquelles sont déposées des « chariots de préparation de commande ». Les remorques ne sont pas motorisées, mais accouplées les unes aux autres pour former un train de remorques entrainées par un véhicule tracteur.

La demande de brevet WO2016/189233 de la demanderesse décrit un convoyeurs mobiles destinés au déplacement d'un véhicule à quatre roues, pour le parcage automatique de véhicules ou le déplacement de véhicules automobiles en cours de fabrication, constitué par un châssis muni de bras mobiles entre une position dans laquelle ils permettent le déplacement dudit châssis sous le véhicule, et une position dans laquelle ils viennent en contact avec les bandes de roulement desdites roues, caractérisé en ce que ledit châssis est télescopique et comprend deux segments portant chacun une paire de bras.

Ce document ne concerne pas un système de transfert d'articles ou de charges avec une pluralité de chariots de chargement.

La demande de brevet DE102017209791 décrit un dispositif de transport autonome servant à transporter des véhicules automobiles, lequel dispositif comprend plusieurs roues qui lui permettent de se déplacer ; un dispositif de réception conçu pour recevoir un véhicule automobile de sorte que ce véhicule automobile soit transporté au moyen du dispositif de transport autonome ; un moteur conçu pour entraîner au moins une des roues ; un dispositif de direction conçu pour diriger au moins une des roues; et un dispositif de commande autonome conçu pour commander le moteur et le dispositif de direction, ce dispositif de commande autonome étant conçu de façon à permettre au dispositif de transport autonome de se déplacer de manière autonome.

Ce document décrit un dispositif de transport autonome servant à transporter des véhicules automobiles et non pas des chariots de chargement.

Le brevet US4310271A décrit un système de transport de conteneur pour transporter une pluralité de véhicules comprend un conteneur de fret et au moins une rampe à l'intérieur du conteneur. La rampe est jetable et est en carton ondulé.

### Inconvénients des solutions de l'art antérieur

Les solutions de l'art antérieur présentent de nombreux inconvénients.

En premier lieu, pour les « trains » de chariots de manutention, un inconvénient de sécurité : Le timon possède généralement une longueur importante pour permettre au chariot de posséder un faible rayon de braquage et d'effectuer ainsi des demitours sur un faible espace. Le conducteur du tracteur, traînant parfois plusieurs chariots, n'a qu'une visibilité limitée sur les chariots et sur les espaces compris entre deux chariots consécutifs, surtout s'ils sont éloignés du tracteur. Le conducteur ne peut ainsi pas voir si une personne se trouve dans la surface balayée par les chariots consécutifs, et il arrive qu'une personne ou un objet se trouve coincé entre deux chariots lors de la giration serrée du train de chariots.

Un deuxième inconvénient concerne la flexibilité : Les charges transportées n'ont pas nécessairement la même destination et sont habituellement chargées et déchargées des chariots au moyen d'engins de manutention tels que des chariots élévateurs. Ceci impose la mise à disposition permanente d'un ou de plusieurs caristes dont la fonction est de délivrer la charge à l'endroit voulu. Pour limiter la manutention des charges et simplifier la logistique, certains chariots peuvent être dételés, ce qui permet de délivrer directement la charge avec son chariot à l'endroit voulu et ainsi d'économiser le déplacement d'un engin de manutention. Néanmoins, le fait de dételer le chariot demande un temps d'intervention relativement long et fastidieux qui génère des temps d'arrêt importants du train de convoyage. Pour permettre au train de convoyage de poursuivre son chemin, les chariots restants doivent être attelés. Cette intervention impose au conducteur du train de convoyage d'effectuer des manœuvres et demande également une intervention longue et fastidieuse.

Un troisième inconvénient concerne le montant de l'investissement nécessaire pour assurer une disponibilité optimale des moyens de chargement et de déchargement. Généralement, le tracteur est accroché à un train de chariots pendant tout le cycle de chargement, transfert et déchargement, puis retour du train de chariots déchargés. Or, le tracteur n'est nécessaire que pendant la phase de transfert. Pendant les autres phases, il est immobilisé inutilement.

Le but de l'invention est d'apporter une plus grande flexibilité, en mobilisant un engin automoteur juste pour la phase de déplacement d'un chariot chargé.

### Solution apportée par l'invention

Afin de répondre aux inconvénients susvisés, la présente invention concerne selon son acception la plus générale un système de transfert d'articles ou de charges formé par au moins une chariot de manutention constituée par un plateau muni d'au moins deux essieux supportant des roues, et un engin porteur caractérisé en ce que ledit engin porteur est un engin automoteur comportant un plateau apte à être glissé sous un chariot, ledit plateau comportant des moyens pour soulever ledit chariot d'une hauteur adaptée à éviter le contact de ces roues avec le sol.

Selon l'invention, lesdits moyens pour soulever ledit chariot sont constitués par au moins un vérin interagissant avec la surface inférieure dudit chariot.

Ledit engin porteur est constitué par un bloc propulseur prolongé par un châssis qui peut être muni de bras de calage des roues du chariot entre une position escamotée et une position dans laquelle dans laquelle ils viennent en contact avec lesdites roues du chariot.

Avantageusement, ledit bloc propulseur est constitué par un châssis avant sur lequel sont fixés deux sous-ensembles latéraux comportant chacun une roue motorisée et directionnelle orientable indépendamment l'une de l'autre et un moyen d'accouplement dudit châssis avec ledit châssis avant.

Selon un mode de réalisation particulier, ledit châssis est formé par une structure d'une épaisseur inférieure à 100 millimètres comportant une roulette d'une section inférieure à 100 millimètres actionnable verticalement par un coussin de levage. De préférence, ledit engin porteur comporte des moyens de conduite autonome.

### Description détaillée d'un exemple non limitatif de réalisation

L'invention sera mieux comprise à la lecture de la description qui suit, se référant à un exemple non limitatif de réalisation illustré par les dessins annexés où :

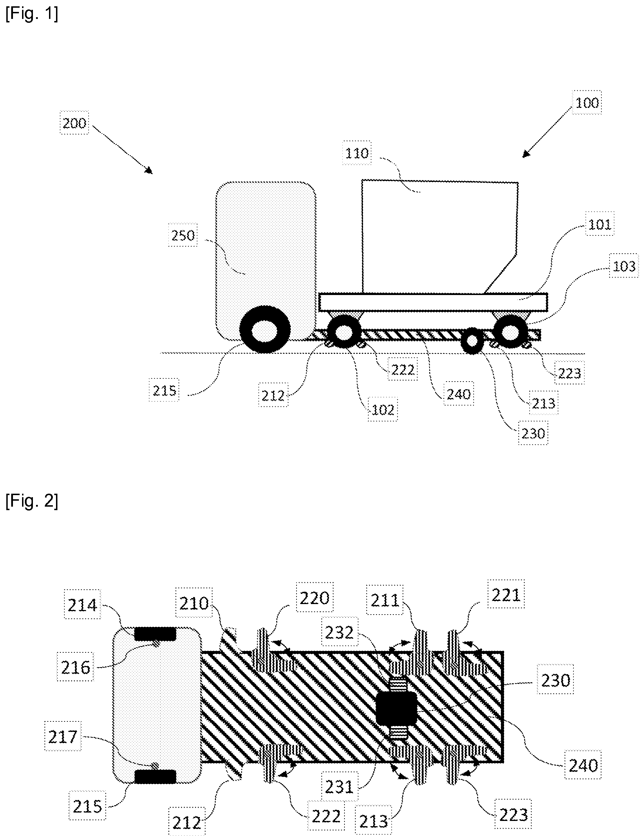

[Fig. 1] La figure 1 représente une vue schématique de côté d'un système selon une première variante de réalisation de l'invention
[Fig. 2] La figure 2 représente une vue schématique de dessous d'un système selon une première variante de réalisation de l'invention

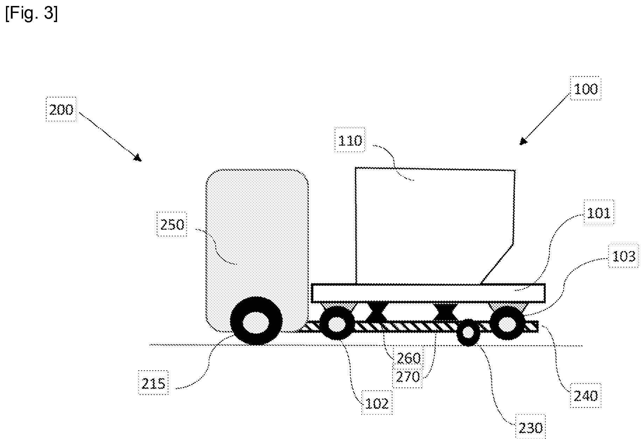

[Fig. 3] La figure 3 représente une vue schématique d'un système selon une deuxième variante de réalisation de l'invention.

### Principes généraux

Le système selon l'invention comprend un chariot (100) et un engin porteur (200). L'engin porteur (200) peut être piloté par un conducteur, et dans ce cas comporter une cabine, ou être autonome, pour une automatisation des déplacements sans conducteur.

Le chariot (100) peut être un chariot « standard » notamment un chariot utilisé pour le chargement et déchargement de bagages ou de conteneurs (110) de fret dans les aéroports par exemple. Il est constitué par un châssis (101) supportant un essieu avant et un essieu arrière, généralement articulés et liés à un timon ou une boule d'accrochage, et comporte des roues (102, 103).

L'engin porteur (200) est constitué par un bloc automoteur (250) muni d'une paire de roues motorisées (215), pivotantes de manière indépendantes par rapport à des axes de guidage (216, 217). Ce bloc automoteur (250) est prolongé par un plateau (240) dont les dimensions sont adaptées pour permettre un glissement entre les roues (102, 103) d'un chariot (100) en passant sous le châssis (101).

Le plateau (240) de l'engin porteur (200) comporte éventuellement des bras (210, 220 ; 211, 221 ; 212, 222 ; 213, 223) qui sont articulés pour permettre un placement sur la bande de roulement des roues respectivement (102, 103) afin de pouvoir soulever le chariot, ou s'effacer pour permettre au plateau (240) de se positionner sous le chariot.

Le plateau (240) comporte en outre un au moins une roue (230) montée sur un coussin gonflable (231, 232), permettant de relever ou abaisser le plateau (240).

Les deux bras (210, 212) les plus proches du bloc automoteur sont fixes. Ils viennent en butée contre la bande de roulement des pneus du chariot lorsque le plateau (240) est glissé sous le châssis du chariot. Pendant cette étape de positionnement du plateau (240) sous le chariot (101) les autres bras sont basculés pour s'effacer, et lorsque les bras (210, 212) arrivent en butée, des vérins font pivoter les autres bras (220, 222) pour bloquer les roues avant (102) du chariot (100), puis le basculement des bras arrière (211, 221 ; 213, 223) pour bloquer les roues arrière (103) du chariot (100).

Le plateau (240) de l'engin porteur (200) présente des dimensions (largeur, hauteur) permettant de le glisser sous le châssis (101) du chariot (100), puis de la soulever par deux vérins (260, 270) venant en contact avec la surface inférieur du châssis (101) pour le soulever suffisamment pour que les roues ne viennent plus en contact avec le sol.

### Utilisation

Cette solution permet d'optimiser l'organisation du chargement et du déchargement pour l'approvisionnement et/ou le transit de charges. Les chariots sont disposées sur les lieux de stockage et/ou de déstockage et peuvent être déplacées manuellement ou tractées par des tracteurs conventionnels dans le périmètre des zones de chargement ou de déchargement. Lorsqu'un chariot est prêt à être transféré, l'un quelconque des engins porteurs peuvent venir se positionner sous le chariot, pour le déplacer, sans attendre que toute une rame de chariot soit chargée. Après le transfert, on retire l'engin porteur du chariot et l'engin porteur est disponible pour un nouveau déplacement.

On évite ainsi d'immobiliser des tracteurs dans les zones de chargement ou de déchargement, et de réunir une rame de chariots reliés par des timons, dont le maniement est délicat et qui peut occasionner des accidents.

## Revendications

1. - Système de transfert d'articles ou de charges formé par au moins un chariot (100) constitué par un plateau (101 ) muni d'au moins deux essieux supportant des roues (102, 103), et un engin porteur (200) tel que ledit engin porteur (200) est un engin automoteur comportant un plateau (240) apte à être glissé sous un desdits chariots (100), ledit plateau (240) comportant des moyens pour soulever ledit chariot (100) d'une hauteur adaptée à éviter le contact de ces roues (102, 103) avec le sol, le système étant **caractérisé en ce que** lesdits moyens pour soulever ledit chariot (100) sont constitués par au moins un vérin interagissant (260, 270) avec la surface inférieure dudit chariot (100).

2. - Système de transfert d'articles ou de charge selon la revendication 1 **caractérisé en ce que** ledit engin porteur (200) est constitué par un bloc propulseur (250) prolongé par un châssis (240) muni de bras (210, 220 ; 211 , 221 ; 212, 222 ; 213, 223) de calage des roues (102, 103) du chariot (100) entre une position escamotée et une position dans laquelle ils viennent en contact avec lesdites roues (102, 103) du chariot (100).

3. - Système de transfert d'articles ou de charge selon la revendication précédente **caractérisé en ce que** ledit bloc propulseur (250) est constitué par un châssis avant sur lequel sont fixés deux sous-ensembles latéraux comportant chacun une roue motorisée (214, 215) et directionnelle orientable indépendamment l'une de l'autre et un moyen d'accouplement dudit châssis avec ledit châssis avant.

4. - Système de transfert d'articles ou de charge selon la revendication précédente **caractérisé en ce que** ledit châssis est formé par une structure d'une épaisseur inférieure à 100 millimètres comportant une roulette d'une section inférieure à 100 millimètres actionnable verticalement par un coussin de levage.

5. - Système de transfert d'articles ou de charge selon l'une quelconque des revendications précédentes **caractérisé en ce que** ledit engin porteur comporte des moyens de conduite autonome.

## Patentansprüche

1. System zum Transport von Gegenständen oder Lasten, das aus mindestens einem Fahrgestell (100), das aus einer Plattform (101) besteht, die mit mindestens zwei Achsen, die Räder (102, 103) tragen, versehen ist, und einer Trägermaschine (200) ausgebildet ist, wobei die Trägermaschine (200) eine automatische Maschine ist, umfassend eine Plattform (240), die geeignet ist, unter eines der Fahrgestelle (100) geschoben zu werden, die Plattform (240) umfassend Mittel zum Anheben des Fahrgestells (100) auf eine Höhe, die angemessen ist, um den Kontakt dieser Räder (102, 103) mit dem Boden zu vermeiden, wobei das System **dadurch gekennzeichnet ist, dass** die Mittel zum Anheben des Fahrgestells (100) aus mindestens einem Heber (260, 270) bestehen, der mit der unteren Oberfläche des Fahrgestells (100) zusammenwirkt.

2. System zum Transport von Gegenständen oder einer Last nach Anspruch 1, **dadurch gekennzeichnet, dass** die Trägermaschine (200) aus einer Antriebseinheit (250) besteht, die durch ein Fahrgestell (240) verlängert ist, das mit Armen (210, 220; 211, 221; 212, 222; 213, 223) zum Verkeilen der Räder (102, 103) des Fahrgestells (100) zwischen einer eingefahrenen Position und einer Position, in der sie mit den Rädern (102, 103) des Fahrgestells (100) in Kontakt kommen, versehen ist.

3. System zum Transport von Gegenständen oder einer Last nach dem vorstehenden Anspruch, **dadurch gekennzeichnet, dass** die Antriebseinheit (250) aus einem vorderen Fahrgestell, an dem zwei seitliche Unterbaugruppen befestigt sind, jeweils umfassend ein motorisiertes Rad (214, 215) und ein Lenkrad, die unabhängig voneinander gelenkt werden können, und einem Mittel zum Koppeln des Fahrgestells mit dem vorderen Fahrgestell besteht.

4. System zum Transport von Gegenständen oder einer Last nach dem vorstehenden Anspruch, **dadurch gekennzeichnet, dass** das Fahrgestell aus einer Struktur mit einer Dicke von weniger als 100 Millimetern besteht, umfassend eine Rolle mit einem Querschnitt von weniger als 100 Millimetern, die durch ein Hubkissen vertikal betätigbar ist.

5. System zum Transport von Gegenständen oder einer Last nach einem der vorstehenden Ansprüche, **dadurch gekennzeichnet, dass** das Trägerfahrzeug autonome Antriebsmittel umfasst.

## Claims

1. System for transporting articles or loads formed by at least one carriage (100) consisting of a platform (101) provided with at least two axles supporting wheels (102, 103), and a carrying vehicle (200), such that said carrying vehicle (200) is a selfpropelled vehicle comprising a platform (240) that can be slid underneath one of said carriages (100), said platform (240) comprising means for lifting said carriage (100) high enough to prevent contact of said wheels (102, 103) with the ground, the system being **characterized in that** said means for lifting said carriage (100) consist of at least one cylinder (260, 270) interacting with the lower surface of said carriage (100).

2. System for transporting articles or loads according to claim 1, **characterized in that** said carrying vehicle (200) consists of a propulsion unit (250) extended by a frame (240) provided with arms (210, 220; 211, 221; 212, 222; 213, 223) for wedging the wheels (102, 103) of the carriage (100) between a retracted position and a position in which they come into contact with said wheels (102, 103) of the carriage (100).

3. System for transporting articles or loads according to the preceding claim, **characterized in that** said propulsion unit (250) consists of a front frame on which two lateral sub-assemblies are fixed each comprising a wheel (214, 215) that is motorized and directionally steerable independently of one another and a means for coupling said frame to said front frame.

4. System for transporting articles or loads according to the preceding claim, **characterized in that** said frame is formed by a structure having a thickness of less than 100 millimeters comprising a wheel having a cross-section of less than 100 millimeters that is vertically actuatable by a lifting cushion.

5. System for transporting articles or loads according to any of the preceding claims, **characterized in that** said carrying vehicle comprises autonomous driving means.
